# EUROPEAN PATENT APPLICATION

(11) **EP 4 661 378 A1**
(43) Date of publication of application: **10.12.2025**
(21) Application number: 24838310.1
(22) Date of filing: 01.03.2024
(51) Int. Cl.: H04M 1/02, F16C 11/04

(54) **ROTATING SHAFT MECHANISM AND ELECTRONIC DEVICE**

(30) Priority: 10.07.2023 CN 202310842560
(71) Applicant: Honor Device Co., Ltd., Shenzhen, Guangdong 518040 (CN)
(72) Inventor: DONG, Shaohong, Shenzhen, Guangdong 518040 (CN); CHEN, Ruihao, Shenzhen, Guangdong 518040 (CN); LIU, Xiaodong, Shenzhen, Guangdong 518040 (CN); TIAN, Chang, Shenzhen, Guangdong 518040 (CN)
(74) Representative: MERH-IP Matias Erny Reichl Hoffmann Patentanwälte PartG mbB
(86) International application number: PCT/CN2024/079642
(87) International publication number: WO 2025/011049

(57) **Abstract**

This application provides a hinge mechanism and an electronic device. The hinge mechanism includes a base, at least two swing arm assemblies, and at least two door panel assemblies. The swing arm assemblies and the door panel assemblies are respectively arranged on two sides of the base. The swing arm assemblies are rotatably connected to the base. The at least two door panel assemblies are respectively arranged on two sides of the base. In the swing arm assembly and the door panel assembly located on a same side of the base, one of an end of the swing arm assembly connected to the door panel assembly and an end of the door panel assembly connected to the swing arm assembly is provided with a first arc-shaped sliding portion and a second arc-shaped sliding fit portion, and the other is provided with a first arc-shaped sliding fit portion and a second arc-shaped sliding portion, the first arc-shaped sliding portion is in sliding fit with the first arc-shaped sliding fit portion, and the second arc-shaped sliding portion is in sliding fit with the second arc-shaped sliding fit portion, so that the swing arm assembly is rotatably connected to the door panel assembly. The structural arrangement of the hinge mechanism in this embodiment of this application contributes to enhancing the reliability of the hinge.

## Description

This application claims priority to Chinese Patent Application No. 202310842560.0, filed in China on July 10, 2023 and entitled "HINGE MECHANISM AND ELECTRONIC DEVICE", which is incorporated herein by reference in its entirety.

### TECHNICAL FIELD

This application relates to the technical field of electronic products, and in particular, to a hinge mechanism and an electronic device.

### BACKGROUND

As technologies of flexible foldable screens become more mature, foldable terminal products have been more widely applied. The foldable terminal products (such as foldable mobile phones, foldable tablets, or foldable laptops) need to meet high standards for both aesthetic design and user experience to gain consumer acceptance. At present, the rotation of foldable terminal products is typically achieved through sliding grooves. However, the existing structure of swing arm grooves results in insufficient overlap of swing arms, leading to poor reliability during the operation of foldable electronic devices.

### SUMMARY

Embodiments of this application provide a hinge mechanism and an electronic device. The arrangement of the hinge mechanism contributes to enhancing the reliability of the electronic device while ensuring the rotational movement of the hinge.

According to a first aspect, an embodiment of this application provides a hinge mechanism. The hinge mechanism includes a base, at least two swing arm assemblies, and at least two door panel assemblies.

The swing arm assemblies are respectively arranged on two sides of the base, and one ends of the swing arm assemblies are rotatably connected to the base; and the at least two door panel assemblies are respectively arranged on two sides of the base.

In the swing arm assembly and the door panel assembly located on a same side of the base, one end of the door panel assembly is connected to an end of the swing arm assembly away from the base; one of the end of the door panel assembly connected to the swing arm assembly and the end of the swing arm assembly connected to the door panel assembly is provided with a first arc-shaped sliding portion and a second arc-shaped sliding fit portion, and the other is provided with a first arc-shaped sliding fit portion and a second arc-shaped sliding portion; and the first arc-shaped sliding portion is in sliding fit with the first arc-shaped sliding fit portion, and the second arc-shaped sliding portion is in sliding fit with the second arc-shaped sliding fit portion, so that the swing arm assembly is rotatably connected to the door panel assembly.

Along a length direction of the base, the first arc-shaped sliding portions and the second arc-shaped sliding fit portion are alternately arranged; and the first arc-shaped sliding fit portions and the second arc-shaped sliding portion are alternately arranged.

Similarly, the end of the door panel assembly close to the swing arm assembly is provided with two first arc-shaped sliding fit portions and a second arc-shaped sliding portion. The fitting method of the two first arc-shaped sliding fit portions and the second arc-shaped sliding portion on the door panel assembly is the same as that of the swing arm assembly. Details are not described herein again.

The two first arc-shaped sliding fit portions are configured to allow the first arc-shaped sliding portion to slide thereon, and the second arc-shaped sliding fit portion is configured to allow the second arc-shaped sliding portion to slide thereon. Through the sliding fit between the second arc-shaped sliding portion and the second arc-shaped sliding fit portion, as well as the sliding fit between the third arc-shaped sliding portion and the third arc-shaped sliding fit portion, the swing arm assembly is rotatably connected to the door panel assembly.

In addition, by arranging the two first arc-shaped sliding fit portions and the second arc-shaped sliding fit portion on the swing arm assembly, and arranging the two first arc-shaped sliding fit portions and the second arc-shaped sliding portion on the door panel assembly, the following are achieved. On the one hand, the sliding trajectory of the swing arm assembly and the door panel assembly are jointly defined by the two first arc-shaped sliding portions, the two first arc-shaped sliding fit portions, the second arc-shaped sliding portion, and the second arc-shaped sliding fit portion, thereby reducing the assembling accuracy requirement of the swing arm assembly and the door panel assembly, and reducing the manufacturing difficulty and manufacturing cost of the swing arm assembly and the door panel assembly.

On the other hand, the sliding trajectory of the swing arm assembly and the door panel assembly is jointly defined by the two first arc-shaped sliding portions, the second arc-shaped sliding fit portion, the two first arc-shaped sliding fit portions, and the second arc-shaped sliding portion. The first arc-shaped sliding portions and the second arc-shaped sliding fit portion, as well as the two first arc-shaped sliding fit portions and the second arc-shaped sliding portion, are arranged in a distributed manner. The distributed arrangement of multiple arc-shaped sliding fit portions can increase the overlap between the swing arm assembly and the door panel assembly, increase the connection strength between the swing arm assembly and the door panel assembly, and ensure that the swing arm assembly and the door panel assembly do not easily disconnect during relative sliding, thereby achieving good reliability.

In a possible implementation, the swing arms on two sides of the base may be arranged opposite to each other, that is, the swing arms are approximately in the same position along the length direction of the base, or the swing arms may be arranged non-opposite to each other, that is, the swing arms are staggered along the length direction of the base; and the door panel assemblies on two sides of the base may be arranged opposite to each other, that is, the door panel assemblies are approximately in the same position along the length direction of the base, or the door panel assemblies may be arranged non-opposite to each other, that is, the door panel assemblies are staggered along the length direction of the base.

In a possible implementation, the first arc-shaped sliding portion, the second arc-shaped sliding fit portion and the swing arm assembly are an integral structure, and/or the first arc-shaped sliding fit portion, the second arc-shaped sliding portion and the door panel assembly are an integrally formed structure.

In a possible implementation, one of the two first arc-shaped sliding portions and the two first arc-shaped sliding fit portions is an arc-shaped protrusion, and the other is an arc-shaped sliding groove. The two may be exchanged.

In a possible implementation, the first arc-shaped sliding portion is in surface contact with the first arc-shaped sliding fit portion, the second arc-shaped sliding portion is in surface contact with the second arc-shaped sliding fit portion, and an arc-shaped sliding rail may slide inside the arc-shaped sliding groove along a groove wall of the arc-shaped sliding groove and be in surface contact with the groove wall of the arc-shaped sliding groove. Compared to point contact and line contact, surface contact contributes to enhancing the stability of the rotating fit between the swing arm assembly and the door panel assembly.

In a possible implementation, one of the two first arc-shaped sliding portions and the two first arc-shaped sliding fit portions may be an arc-shaped sliding groove, and the other may include multiple sub-sliding portions; and one of the second arc-shaped sliding portion and the second arc-shaped sliding fit portion may be an arc-shaped sliding groove, the other may include multiple sub-sliding portions, and the sub-sliding portions may be rod-shaped structures, block-shaped structures, and the like.

In a possible implementation, each door panel assembly includes a door panel and a connecting member, the connecting member is rotatably connected to the door panel, one of an end of the connecting member connected to the swing arm assembly and an end of the swing arm assembly connected to the connecting member is provided with the first arc-shaped sliding portion and the second arc-shaped sliding fit portion, and the other is provided with the first arc-shaped sliding fit portion and the second arc-shaped sliding portion.

In a possible implementation, each door panel assembly includes a door panel and a connecting member, one of the end of the connecting member connected to the door panel and an end of the door panel connected to the connecting member is provided with a third arc-shaped sliding portion and a fourth arc-shaped sliding fit portion, and the other is provided with a third arc-shaped sliding fit portion and a fourth arc-shaped sliding portion.

It can be understood that, for the connection method between the connecting member and the door panel, a reference may be made to the connection method between the swing arm assembly and the door panel assembly in the above embodiment, and its specific effect and structural arrangement are not described herein again.

In a possible implementation, each swing arm assembly includes a first swing arm and a second swing arm, the first swing arm is rotatably connected to the base, and the second swing arm is rotatably connected to the door panel assembly. The first swing arm is rotatably connected to the second swing arm, one of the end of the first swing arm connected to the second swing arm and the end of the second swing arm connected to the first swing arm is provided with two fifth arc-shaped sliding portions and a sixth arc-shaped sliding fit portion, and the other is provided with two fifth arc-shaped sliding fit portions and a sixth arc-shaped sliding portions.

It can be understood that, for the connection method between the first swing arm and the second swing arm, a reference may be made to the connection method between the swing arm assembly and the door panel assembly in the above embodiment, and the specific connecting structure and effect of the first swing arm and the second swing arm are not described herein again.

In a possible implementation, each swing arm assembly includes a first swing arm, a second swing arm, and a connecting member, each door panel assembly includes a door panel, the first swing arm is rotatably connected to the second swing arm, the second swing arm is rotatably connected to the connecting member, one of an end of the connecting member connected to the door panel and an end of the door panel connected to the connecting member is provided with a third arc-shaped sliding portion and a fourth arc-shaped sliding fit portion, and the other is provided with a third arc-shaped sliding fit portion and a fourth arc-shaped sliding portion.

According to a second aspect, an embodiment of this application provides an electronic device. The electronic device includes:
a foldable apparatus including a first housing, a second housing, and the hinge mechanism according to any one of the embodiments of the first aspect, where the first housing is connected to the connecting member on one side of the base, and the second housing is connected to the connecting member on the other side of the base; and
a foldable screen arranged on the first housing and the second housing, where a position of a foldable portion of the foldable screen corresponds to a position of the hinge mechanism.

It can be understood that, for the beneficial effects of the second aspect, a reference may be made to the relevant description in the first aspect. Details are not described herein again.

### BRIEF DESCRIPTION OF DRAWINGS

FIG. 1 is a schematic structural diagram of an electronic device in an unfolded state according to some embodiments of this application;
FIG. 2 is a schematic structural diagram of an electronic device in a folded state according to some embodiments of this application;
FIG. 3 is a schematic structural diagram of an electronic device in an intermediate state according to some embodiments of this application;
FIG. 4 is a schematic structural diagram of a foldable apparatus according to some embodiments of this application;
FIG. 5 is an exploded schematic diagram of a hinge mechanism in FIG. 4;
FIG. 6 is a schematic diagram of a hinge mechanism in a folded state in FIG. 4;
FIG. 7 is an exploded schematic diagram of a hinge mechanism in FIG. 6;
FIG. 8 is a partial exploded diagram of a hinge mechanism according to some embodiments of this application;
FIG. 9 is a schematic diagram of a swing arm of a hinge mechanism in a folded state in FIG. 8;
FIG. 10 is a schematic structural diagram of a first swing arm according to some embodiments of this application;
FIG. 11 is a schematic structural diagram of a second swing arm according to some embodiments of this application;
FIG. 12 is a schematic diagram shows fitting between a first swing arm and a second swing arm according to some embodiments of this application;
FIG. 13 is a schematic structural diagram shows fitting between a swing arm assembly and a door panel assembly according to some embodiments of this application;
FIG. 14 is an exploded schematic diagram shows connection between a swing arm assembly and a door panel assembly in FIG. 13;
FIG. 15 is a schematic diagram of a hinge mechanism in a folded state according to some embodiments of this application;
FIG. 16 is a schematic diagram of a hinge mechanism in an unfolded state according to some embodiments of this application;
FIG. 17 is a schematic structural diagram of a connecting member and a door panel according to some embodiments of this application;
FIG. 18 is a schematic diagram shows fitting between a connecting member and a door panel in FIG. 17;
FIG. 19 is an exploded schematic diagram of a hinge mechanism according to some embodiments of this application;
FIG. 20 is a schematic diagram shows connection between a swing arm assembly and a door panel assembly in FIG. 19;
FIG. 21 is an exploded schematic diagram of a swing arm assembly and a door panel assembly in FIG. 19; and
FIG. 22 is a schematic diagram of a hinge mechanism in a folded state in FIG. 19.

Description of reference numerals:
10-first swing arm; 20-second swing arm; 30-connecting member; 40-door panel; 100-electronic device; 101-fifth arc-shaped sliding portion; 102-sixth arc-shaped sliding fit portion; 110-sliding protrusion portion; 120-swing arm assembly; 130-first housing; 140-second housing; 150-foldable area; 200-hinge mechanism; 201-fifth arc-shaped sliding fit portion; 202-sixth arc-shaped sliding portion; 203-third arc-shaped sliding portion; 204-fourth arc-shaped sliding portion; 210-base; 211-sliding groove; 300-flexible screen; 301-first arc-shaped sliding fit portion; 302-second arc-shaped sliding portion; 303-third arc-shaped sliding portion; 304-fourth arc-shaped sliding fit portion; 340-door panel assembly; 400-foldable apparatus; 401-third arc-shaped sliding fit portion; 402-fourth arc-shaped sliding portion; 200-hinge mechanism; 201-fifth arc-shaped sliding fit portion; 202-sixth arc-shaped sliding portion; 203-third arc-shaped sliding portion; 204-fourth arc-shaped sliding portion; 210-base; and 211-sliding groove.

### DESCRIPTION OF EMBODIMENTS

For ease of understanding, terms involved in embodiments of this application will be explained first.

And/or: it only describes an association between associated objects and represents that three relationships may exist. For example, A and/or B may represent the following three cases: only A exists, both A and B exist, and only B exists.

Multiple: it refers to two or more.

Connection: it should be understood in a broad sense. For example, connection between A and B may be direct connection between A and B, or indirect connection between A and B through an intermediate medium.

The following clearly describes the specific implementations of this application with reference to the accompanying drawings.

Embodiments of this application provide a hinge mechanism and an electronic device using the hinge mechanism. The structural arrangement of the hinge mechanism reduces the thickness of the entire machine while ensuring the rotational movement of the swing arm.

The electronic device may be any device with foldable performance, and can be unfolded and folded through an operation of a user. The electronic device includes, but is not limited to, a mobile phone (cellphone), a notebook computer, a tablet personal computer, a laptop computer, a personal digital assistant, a wearable device, a vehicle-mounted device (mobile device), or the like.

In order to make the purposes, technical solutions and advantages of this application understood more clearly, in embodiments of this application, description will be made by taking the electronic device being a mobile phone as an example.

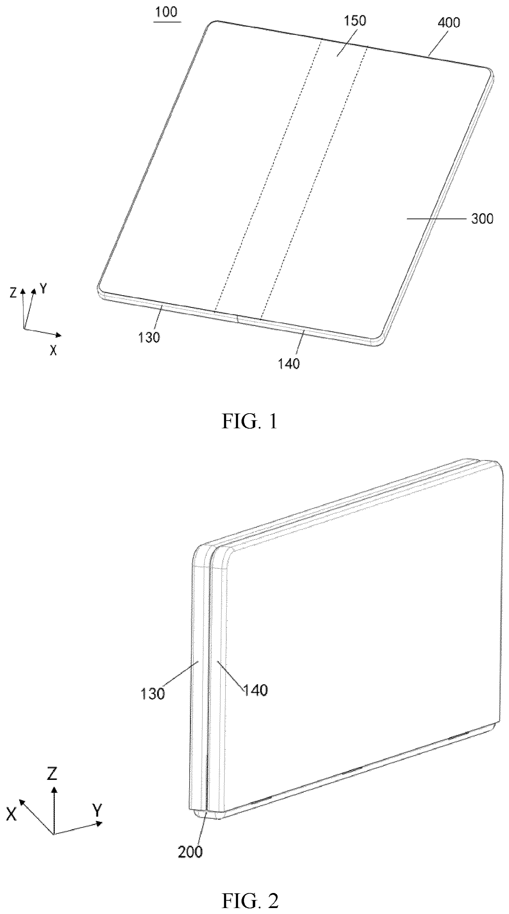

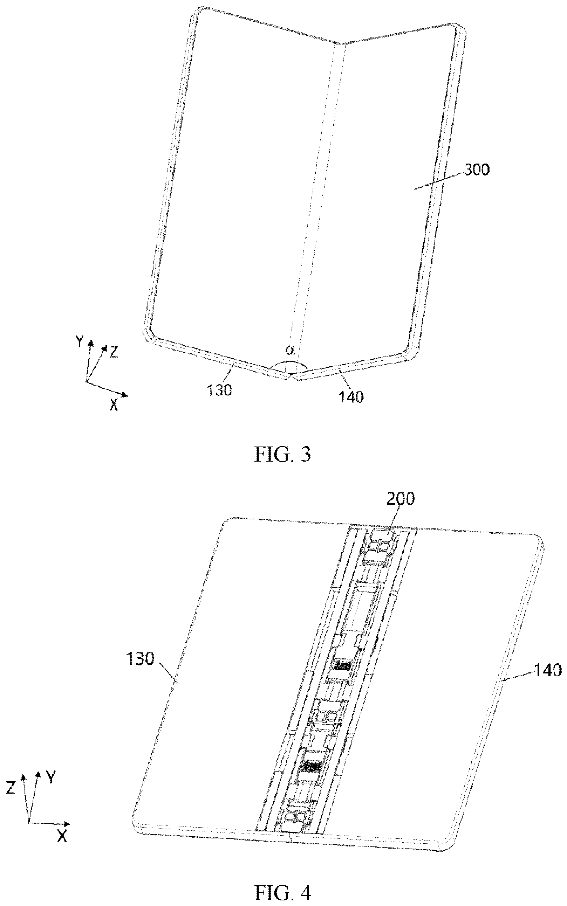

Refer to FIG. 1 and FIG. 2. FIG. 1 shows a schematic structural diagram of an electronic device 100 in an unfolded state according to some embodiments of this application. FIG. 2 shows a schematic structural diagram of the electronic device 100 shown in FIG. 1 in a folded state. FIG. 3 shows a schematic diagram of the electronic device 100 shown in FIG. 1 in an intermediate state.

Under different use requirements, the terminal device 100 may be unfolded to an unfolded state, or may be folded to a folded state, or may be in an intermediate state between the unfolded state and the folded state. It should be understood that the intermediate state may be any state of the terminal device 100 between the unfolded state and the folded state, rather than a unique state.

The terminal device 100 includes a foldable apparatus 400 and a foldable screen 300. The foldable screen 300 is arranged on the foldable apparatus 400. The foldable apparatus 400 can provide support and protection for the foldable screen 300, and can be folded or unfolded. The foldable screen 300 is a flexible screen, and therefore, can be folded or unfolded together with the foldable apparatus 400. It can be understood that the foldable screen 300 can be configured to display information and provide an interactive interface for a user, and may be various types of display screens.

As shown in FIG. 4, the foldable apparatus 400 includes a hinge mechanism 200, a first housing 130, and a second housing 140. The hinge mechanism 200 is located between the first housing 120 and the second housing 140, and is respectively connected to the first housing 130 and the second housing 140. The first housing 130 and the second housing 140 may rotate relative to each other based on the hinge mechanism 200, so that the first housing and the second housing can rotate toward each other (that is, perform inward rotation) to make the terminal device 100 be in a folded state, and can rotate away from each other (that is, perform outward rotation) to make the terminal device 100 be in an unfolded state.

It can be understood that the number of the hinge mechanism 200 may be one or more. In a case that multiple hinge mechanisms 200 are arranged, the hinge mechanisms 200 may be sequentially spaced apart and located between the first housing 130 and the second housing 140.

Continuously refer to FIG. 1 to FIG. 4, the foldable screen 300 is arranged on the first housing 130 and the second housing 140, and can be folded or unfolded as the first housing 130 and the second housing 140 rotate. The foldable screen 300 is provided with a foldable area 150, and a position of the foldable area 150 corresponds to a position of the hinge mechanism 200, that is, the foldable area 150 and the hinge mechanism 200 are arranged opposite to each other. The foldable area 150 is flexible, so that when the first housing 130 and the second housing 140 rotate relative to each other, the foldable screen 300 can be folded by bending the foldable area 150. When the foldable screen 300 is in the folded state, the foldable area 150 may be drop-shaped or U-shaped. However, this application is not limited to this shape.

It can be understood that a portion of the foldable screen 300 corresponding to the first housing 130 may be flexible or rigid. A portion of the foldable screen 300 corresponding to the second housing 140 may be flexible or rigid.

A front surface of the foldable screen 300 is a surface facing away from the hinge mechanism 200, that is, a display surface of the foldable screen 300 for displaying an image. A back surface of the foldable screen 300 is a surface facing towards the hinge mechanism 200, and may alternatively be considered as a non-display surface of the foldable screen 300.

When the terminal device 100 is in the unfolded state, both the foldable apparatus 400 and the foldable screen 300 are also in the unfolded state, and a first surface of the first housing 130 for mounting the foldable screen 300 and a second surface of the second housing 140 for mounting the foldable screen 300 are approximately in the same plane, that is, an included angle between the first surface and the second surface is approximately 180°. In this case, the foldable screen 300 is approximately flat, so that the terminal device 100 has a larger display area. It should be understood that, when the foldable apparatus 400 is in the unfolded state, the included angle between the first surface and the second surface is not limited to be absolutely 180°, and the included angle between the first surface and the second surface may alternatively be greater than or less than 180°, but close to 180°. For example, the included angle may range from 165° to 190° (such as, but not limited to, 170°, 173°, 175°, 182°, or 185°), and the foldable screen 300 can also be unfolded.

When the terminal device 100 is in the folded state, both the foldable apparatus 400 and the foldable screen 300 are also in the folded state, and the first surface of the first housing 130 for mounting the foldable screen 300 and the second surface of the second housing 140 for mounting the foldable screen 300 are arranged opposite to and approximately parallel to each other, that is, an included angle between the first surface and the second surface is approximately 0°. In this case, the foldable screen 300 is folded through its foldable portion 150 to facilitate the storage of the terminal device 100. It should be understood that when the foldable apparatus 400 is in the unfolded state, the first surface and the second surface are not limited to be absolutely parallel, and the included angle between the first surface and the second surface may alternatively be greater than 0°, but close to 0°. For example, the included angle may range from 0° to 15° (such as, but not limited to, 1°, 2°, 3°, 5°, or 10°), and the foldable screen 300 can also be folded.

In some embodiments, the terminal device 100 may be an inward-folding terminal device, and the foldable screen 100 is an inward-folding foldable screen. After the foldable screen 300 is folded, the foldable screen 300 is located between the first housing 130 and the second housing 140.

Certainly, in some other embodiments, the terminal device 100 may alternatively be an outward-folding terminal device, and the foldable screen 300 is an outward-folding foldable screen. After the foldable screen 300 is folded, a display surface of the foldable screen 300 is exposed, and the first housing 130 and the second housing 140 are located in the foldable screen 300.

In some embodiments, a mounting space may be provided on at least one of the first housing 130 and the second housing 140 for mounting electronic components of the terminal device 100. For example, the electronic components may include, but not limited to, a circuit board, a battery, a receiver, a speaker, a camera, and the like. The circuit board may integrate electronic components, such as a main controller, a storage unit, an antenna module, and a power management module, of the terminal device 100. The battery may supply power to electronic components such as the foldable screen 300, the circuit board, the receiver, the speaker, and the camera. The first housing 130 and the second housing 140 may have the same or different shapes and structures, which are not limited in this embodiment of this application. The first housing 130 and the second housing 140 may be a middle frame structure. Specific shapes and structures may be configured as required, which are not uniquely limited in this embodiment of this application.

The hinge mechanism 200 provided in this embodiment of this application will be described below in detail.

For the convenience of describing the following embodiments, an XYZ three-axis rectangular coordinate system is established, the width direction of the hinge mechanism 200 is defined as the X-axis direction, and the X-axis direction is parallel to a direction that the first housing 130 points to the second housing 140 when the terminal device 100 is in the unfolded state. The length direction of the hinge mechanism 200 is defined as the Y-axis direction, and the Y-axis direction is parallel to a direction that one end of the first housing 130 points to the other opposite end when the terminal device 100 is in the unfolded state. The thickness direction of the hinge mechanism 200 is defined as the Z-axis direction, and the Z-axis direction is parallel to a direction that the first housing 130 points to the foldable screen 300 when the terminal device 100 is in the unfolded state, that is, parallel to the thickness direction of the terminal device 100. Any two of the X-axis direction, Y-axis direction, and Z-axis direction are perpendicular to each other. The X-axis direction includes an X-axis positive direction and an X-axis negative direction, and the Y-axis direction and Z-axis direction are similar. It should be understood that the coordinate system of the hinge mechanism 100 may be flexibly set according to the actual needs, this application only provides an example, and it cannot be considered as a special limitation on this application.

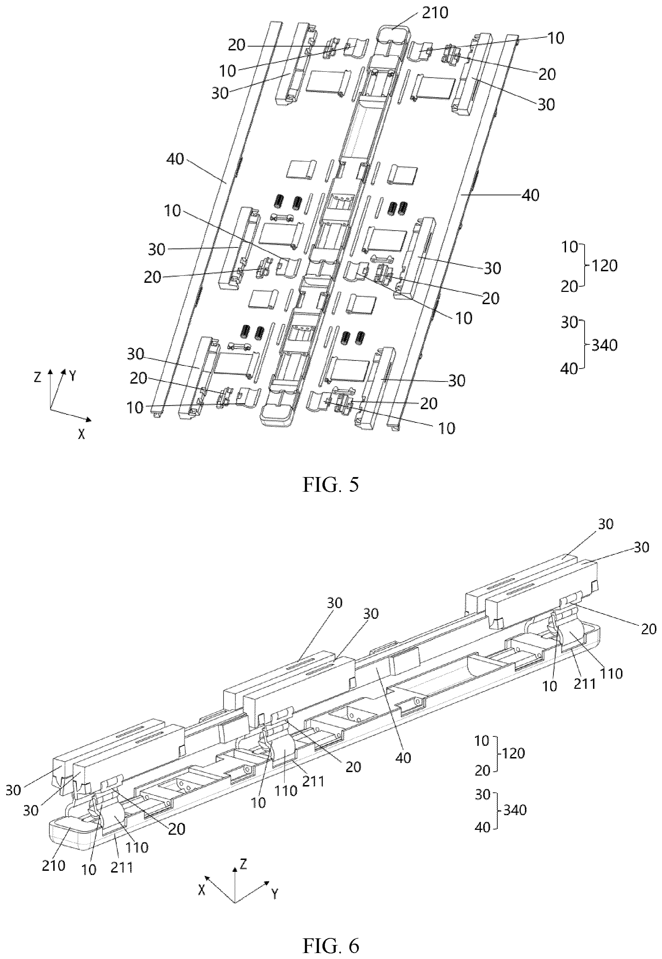

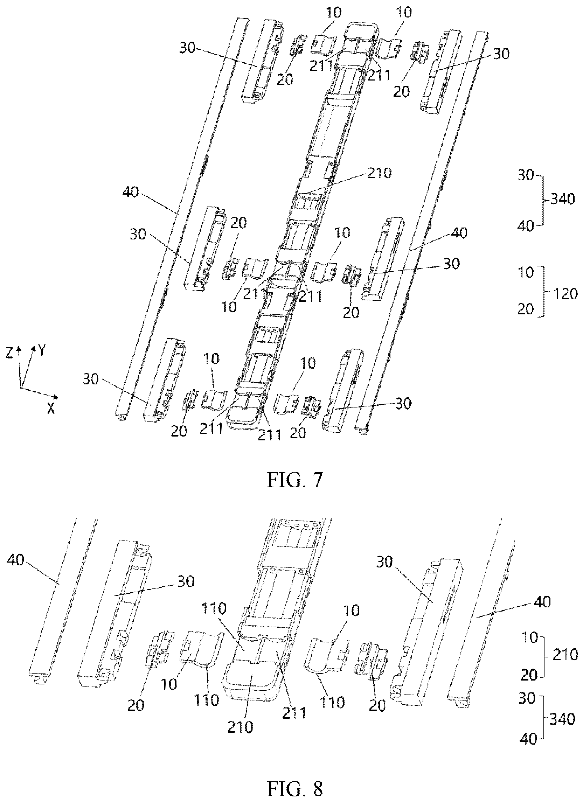

FIG. 5 shows an exploded diagram of the hinge mechanism in FIG. 4. FIG. 6 is a schematic diagram of the hinge mechanism 200 in the folded state in FIG. 4. FIG. 7 is an exploded schematic diagram of the hinge mechanism in FIG. 6. FIG. 8 is a partial exploded diagram of the hinge mechanism according to some embodiments of this application.

As shown in FIG. 5 to FIG. 8, the hinge mechanism 200 includes a base 210, at least two door panel assemblies 340, and at least two swing arm assemblies 120. The swing arm assembly 120 and the door panel assembly 340 located on a same side of the base 210 are rotatably connected to each other. The door panel assemblies 120 are respectively arranged on two sides of the base 210, and the swing arm assemblies 120 are respectively arranged on two sides of the base 210. In the swing arm assemblies 120 located on two sides of the base 210, one end of the swing arm assembly 120 is rotatably connected to the base 210. The rotatable connection form between the swing arm assembly 120 and the base 210 is not limited in this application, provided the swing arm assembly 120 can rotate around the base 210. For example, a connection interface between the swing arm assembly 120 and the base 210 may be an arc-shaped sliding protrusion portion 110 on the end of the swing arm assembly 340 close to the base 210. The base 210 is provided with a sliding groove 211 that fits with the arc-shaped sliding protrusion portion. Through the sliding fit between the sliding protrusion 110 and the sliding groove 211, the swing arm assembly 120 is rotatably connected to the base 210.

In some embodiments, the end of the swing arm assembly 120 close to the base 210 may be connected to the base 210 through various rotatable connection methods, so that the swing arm assembly 120 can rotate relative to the base 210 while being connected to the base 210. The rotation axes of the swing arm assemblies 120 relative to the base 10 may be approximately parallel. Of course, certain deviations may be allowed, but the axes are ensured to remain approximately parallel, that is, manufacturing errors, assembly errors and the like may be allowed. Rotation axes of the swing arm assemblies 120 relative to the base 210 may be approximately parallel to the length direction of the base 210.

It can be understood that the base 210 may play a role of supporting and connecting the swing arm assembly 120, and may be any structure with regular or irregular shapes, such as, but not limited to, a block structure, a frame structure, a housing structure, or a plate structure. The base 210 may be a single component or an assembly that includes multiple assembled parts. In some cases, the base 210 is also referred to as a main shaft, a main body, or the like.

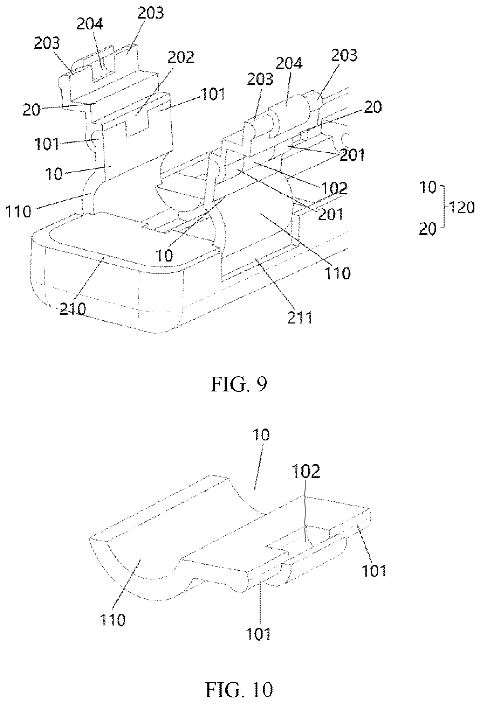

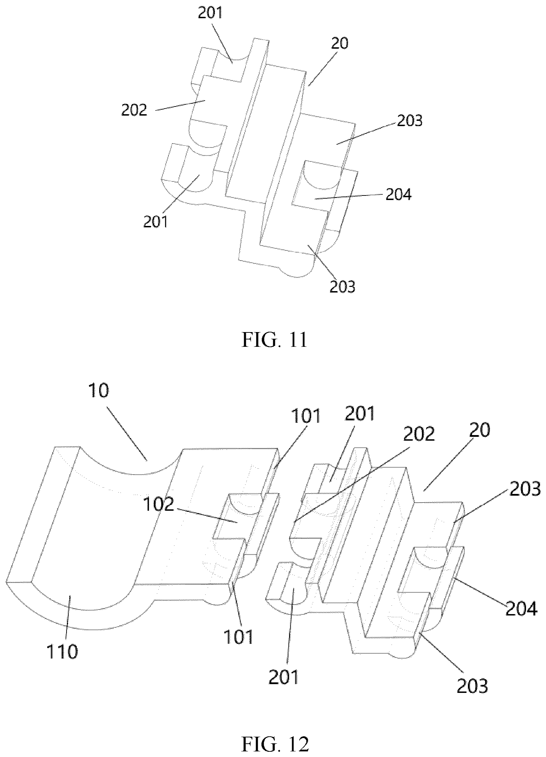

FIG. 9 is a schematic diagram of a swing arm of a hinge mechanism in a folded state in FIG. 8. FIG. 10 is a schematic structural diagram of a first swing arm according to some embodiments of this application. FIG. 11 is a schematic structural diagram of a second swing arm. FIG. 12 is a schematic diagram shows fitting between a first swing arm and a second swing arm.

In some embodiments, as shown in FIG. 9 to FIG. 12, the swing arm assemblies 120 located on two sides of the base 210 each include a first swing arm 10 and a second swing arm 20, and the first swing arm 10 and the second swing arm 20 are rotatably connected. In the first swing arms 10 located on two sides of the base 210, one end of the first swing arm 10 is rotatably connected to the base 210. The rotatable connection form between the first swing arm 10 and the base 210 is not limited in this application, provided the first swing arm 10 can rotate around the base 210. The other end of the first swing arm 10 is connected to the second swing arm 20.

Specifically, as shown in FIG. 10, in the first swing arm 10 and the second swing arm 20 located on the same side of the base 210, the end of the first swing arm 10 close to the second swing arm 20 is provided with two fifth arc-shaped sliding portions 101 and one sixth arc-shaped sliding fit portion 102. The two fifth arc-shaped sliding portions 101 are respectively located on two opposite sides of the sixth arc-shaped sliding fit portion 102 and are arranged side by side with the third arc-shaped sliding fit portion 102 along the length direction of the base 210.

As shown in FIG. 11, the end of the second swing arm 20 close to the first swing arm 10 is provided with two fifth arc-shaped sliding fit portions 201 and a sixth arc-shaped sliding portion 202. The two fifth arc-shaped sliding fit portions 201 are respectively located on two opposite sides of the sixth arc-shaped sliding portion 202 and are arranged side by side with the sixth arc-shaped sliding portion 202 along the length direction of the base 210.

Arc-shaped surfaces of the two fifth arc-shaped sliding portions 101 on the first swing arm 10 overlap with inner wall surfaces of the two arc-shaped sliding fit portions 201 on the second swing arm 20, so that the two fifth arc-shaped sliding portions 101 on the first swing arm 10 are in sliding fit with the two fifth arc-shaped sliding fit portions 201 on the second swing arm 20. An arc-shaped surface of the sixth arc-shaped sliding portion 202 on the second swing arm 20 overlaps with an inner wall surface of the third arc-shaped sliding fit portion 102 on the first swing arm 10, so that the third arc-shaped sliding fit portion 102 on the first swing arm 10 is in sliding fit with the third arc-shaped sliding portion 202 on the second swing arm 20.

It can be understood that the two fifth arc-shaped sliding fit portions 201 are configured to allow the two fifth arc-shaped sliding portions 101 to slide thereon, and the sixth arc-shaped sliding fit portion 202 is configured to allow the sixth arc-shaped sliding portion 102 to slide thereon. Through the sliding fit between the two fifth arc-shaped sliding portions 101 and the two fifth arc-shaped sliding fit portions 201, as well as the sliding fit between the sixth arc-shaped sliding portion 202 and the sixth arc-shaped sliding fit portion 102, the first swing arm 10 and the second swing arm 20 are rotatably connected.

By arranging two fifth arc-shaped sliding portions 101 and one sixth arc-shaped sliding fit portion 102 on the first swing arm 10, and arranging two fifth arc-shaped sliding fit portions 201 and a sixth arc-shaped sliding portion 202 on the second swing arm 20, the sliding trajectories of the first swing arm 10 and the second swing arm 20 are jointly defined by the fifth arc-shaped sliding fit portions 201 and the sixth arc-shaped sliding fit portion 102. On the one hand, by jointly defining the sliding trajectories of the first swing arm 10 and the second swing arm 20 through the two fifth arc-shaped sliding fit portions 201 and the sixth arc-shaped sliding fit portion 102, the precision requirements of the fifth arc-shaped sliding fit portions 201 and the sixth arc-shaped sliding fit portion 102 can be reduced, thereby reducing the manufacturing difficulty and manufacturing cost of the swing arms. On the other hand, by jointly defining the sliding trajectories of the first swing arm 10 and the second swing arm 20 through the two fifth arc-shaped sliding fit portions 201 and the sixth arc-shaped sliding fit portion 102, the fifth arc-shaped sliding fit portions 201 and the sixth arc-shaped sliding fit portion 102 can be arranged in a distributed manner. The multiple arc-shaped sliding fit portions arranged in a distributed manner can increase the overlap between the first swing arm 10 and the second swing arm 20, increase the connection strength between the first swing arm 10 and the second swing arm 20, and ensure that the first swing arm 10 and the second swing arm 20 do not easily disconnect during relative sliding, thereby achieving good reliability.

It can be understood that the first swing arms 10 are arranged on two sides of the base 210, but the number of the first swing arm assemblies on each side may be one or more, the number of the first swing arms 10 on each side may be one or more, and the number of the first swing arms 10 on two sides of the base 210 may be the same or different. The second swing arms 20 being respectively arranged on two sides of the base 210 refers to that the second swing arms 20 are arranged on two sides of the base 210, but the number of the second swing arms 20 on each side may be one or more, and the number of the second swing arms 20 on two sides of the base 210 may be the same or different.

It should be understood that the two sides of the base 210 are two sides with a central longitudinal section of the base 210 as an interface, and the central longitudinal section is a plane parallel to the length direction (i.e., the Y-axis direction) and the thickness direction (i.e., the Z-axis direction) of the base 210, and equally dividing the base 10 along the width direction (i.e., the X-axis direction) of the base 210. By analogy, two sides of a component described below are two sides obtained by using a central longitudinal section of the component as an interface. Optionally, the first swing arms 10 on the two sides of the base 210 may be arranged opposite to each other, that is, the first swing arms are approximately at the same position in the length direction of the base 210. Optionally, the second swing arms 20 on the two sides of the base 210 may be arranged opposite to each other, that is, the second swing arms are approximately at the same position in the length direction of the base 210. This case is exemplarily shown in FIG. 6 and FIG. 7. Of course, in some other embodiments, the first swing arms on the two sides of the base 210 may be arranged non-opposite to each other, that is, the first swing arms are staggered along the length direction of the base 210, and the second swing arms on the two sides of the base 210 may also be arranged non-opposite to each other, that is, the second swing arms are staggered along the length direction of the base 210. The first swing arm 10 and the second swing arm 20 located on the same side of the base 210 are in a rotatable connected state.

Since the rotatable connection between the first swing arm 10 and the second swing arm 20 located on the same side of the base 210 is achieved through the sliding fit between the fifth arc-shaped sliding portions 101 and the fifth arc-shaped sliding fit portions 201, as well as the sliding fit between the sixth arc-shaped sliding portion 202 and the sixth arc-shaped sliding fit portion 120, the fifth arc-shaped sliding portions 101 and the fifth arc-shaped sliding fit portions 201 slide relative to each other along the arc-shaped trajectory to achieve relative rotation, while the sixth arc-shaped sliding portion 202 and the sixth arc-shaped sliding fit portion 102 slide relative to each other along the arc-shaped trajectory to achieve relative rotation. The fifth arc-shaped sliding portions 101 and the fifth arc-shaped sliding fit portions 201 are both arc-shaped structures. Each fifth arc-shaped sliding portions 101 is an arc-shaped protrusion structure. The arc-shaped protrusion structure is provided with an arc-shaped surface. Each fifth arc-shaped sliding fit portion 201 is an arc-shaped sliding groove. The sliding groove is provided with an arc-shaped surface in sliding fit with the arc-shaped protrusion. Similarly, the sixth arc-shaped sliding portion 202 and the sixth arc-shaped sliding fit portion are both arc-shaped structures. The specific structures are not described herein again, provided they can achieve relative sliding and contact fit along the arc-shaped trajectory.

The two fifth arc-shaped sliding portions 101 and the first swing arm 10 may be an integrally formed structure, or may be separately formed and then fixedly connected. The sixth arc-shaped sliding fit portion 102 and the first swing arm 10 may be an integrally formed structure, or may be separately formed and then fixedly connected. Similarly, the two fifth arc-shaped sliding portions 201 and the second swing arm 20 may be an integrally formed structure, or may be separately formed and then fixedly connected. The sixth arc-shaped sliding portion 202 and the second swing arm 20 may be an integrally formed structure, or may be separately formed and then fixedly connected.

The first swing arms 10 and the second swing arms 20 located on the two sides of the base 210 can rotate relative to each other based on the base 210, so as to cause the hinge mechanism 200 to switch between the unfolded state and the folded state. When the hinge mechanism 200 is applied to the electronic device 100, as the electronic device 100 switches between the unfolded state and the folded state, the hinge mechanism 200 also synchronously switches between the unfolded state and the folded state.

Refer to FIG. 9. When the hinge mechanism 200 rotates from the folded state to the unfolded state, the second swing arms 20 located on the two sides of the base 210 rotate away from each other. The second swing arms 20 located on the two sides of the base 210 drive the first swing arms 10 to rotate relative to the base 210. The first swing arms 10 located on the two sides of the base 210 also rotate away from each other. At the same time, the two fifth arc-shaped sliding portions 101 slide in arc-shaped sliding grooves formed by the two fifth arc-shaped sliding fit portions 201, and the sixth arc-shaped sliding portion 202 slides in a groove formed by the sixth arc-shaped sliding fit portion 102, so that the first swing arms 10 and the second swing arms 20 rotate relative to each other. A combination formed by the first swing arms 10 and the second swing arms 20 rotates away from the base 210.

According to the above description, it can be seen that in the hinge mechanism 200 provided in this embodiment of this application, since the rotatable connection between the first swing arm 10 and the second swing arm 20 is achieved through the sliding fit between the two fifth arc-shaped sliding portions 101 and the two fifth arc-shaped sliding fit portions 201, as well as the sliding fit between the sixth arc-shaped sliding portion 202 and the sixth arc-shaped sliding fit portion 102, it may be considered as that the first swing arm 10 and the second swing arm 20 are rotatably connected through a virtual shaft. When the hinge mechanism 200 switches between the unfolded state and the folded state, an angle that the first swing arm 10 rotates relative to the base 210 may be different from an angle that the second swing arm 20 rotates relative to the base 210. Therefore, when the hinge mechanism 200 is applied to the terminal device 100, in the process that the terminal device 100 switches from the unfolded state to the folded state, the angle that the first swing arm 10 rotates relative to the base 210 may be designed as needed, and is not required to be the same as the angle that the second swing arm 20 rotates relative to the base 210. The possibility of interference between the first swing arm and the foldable screen of the terminal device when the terminal device is in the folded state can be reduced, thereby helping to further miniaturize the size of the hinge mechanism and achieve the lightweight design of the terminal device.

In some embodiments, referring to FIG. 10 to FIG. 12, one of the two fifth arc-shaped sliding portions 101 and the two fifth arc-shaped sliding fit portions 201 is an arc-shaped protrusion, and the other is an arc-shaped sliding groove in fit with the arc-shaped protrusion; and one of the third arc-shaped sliding portion 202 and the third arc-shaped sliding fit portion 102 is an arc-shaped protrusion, and the other is a sliding groove in fit with the arc-shaped protrusion. FIG. 10 to FIG. 12 exemplarily show a case that the two fifth arc-shaped sliding portions 101 are arc-shaped protrusions, the sixth arc-shaped sliding portion 202 is an arc-shaped protrusion, the two fifth arc-shaped sliding fit portions 201 are arc-shaped sliding grooves, and the sixth arc-shaped sliding fit portion 102 is an arc-shaped sliding groove. Of course, the two may also be exchanged, that is, the two fifth arc-shaped sliding portions 101 are arc-shaped sliding grooves, the sixth sliding portion 202 is an arc-shaped sliding groove, the two fifth arc-shaped sliding fit portions 201 are arc-shaped protrusions, and the sixth arc-shaped sliding fit portion 102 is an arc-shaped protrusion. The two fifth arc-shaped sliding portions 101 of the first swing arm 10 are in surface contact with the two fifth arc-shaped sliding fit portions 201 of the second swing arm 20, and the third arc-shaped sliding fit portion 102 of the first swing arm 10 is in surface contact with the third arc-shaped sliding portion 202 of the second swing arm 20. The arc-shaped protrusions may slide along the arc-shaped sliding grooves in the arc-shaped sliding grooves and be in surface contact with the groove walls of the arc-shaped sliding grooves.

It can be understood that since the arc-shaped protrusions are in sliding fit with the arc-shaped sliding grooves, and the two are in surface contact, compared with point contact and line contact, surface contact contributes to enhancing the stability and reliability during the relative sliding of the fifth arc-shaped sliding portions 101 and the fifth arc-shaped sliding fit portions 201, and the relative sliding of the sixth arc-shaped sliding portion 102 and the sixth arc-shaped sliding fit portion 202, thereby improving the stability of the rotating fit between the first swing arm 10 and the second swing arm 20.

Optionally, the two fifth arc-shaped sliding portions 101 are arc-shaped protrusions, the two fifth arc-shaped sliding fit portions 201 are arc-shaped sliding grooves, the sixth arc-shaped sliding portion 202 is an arc-shaped protrusion, the sixth arc-shaped sliding fit portion 102 is an arc-shaped sliding groove, each arc-shaped sliding groove is formed with an opening in an upper surface of each swing arm, and each arc-shaped protrusion slides in the arc-shaped sliding groove, thereby reducing the overall thickness formed by the overlapping and fitting of the first swing arm 10 and the second swing arm 20. The upper surface of the second swing arm 20 refers to a side surface that the second swing arm 20 faces towards the foldable screen 300.

It needs to be stated that the fitting between the two fifth arc-shaped sliding portions 101 and the two fifth arc-shaped sliding fit portions 201, and the fitting between the sixth arc-shaped sliding portion 202 and the sixth arc-shaped sliding fitting portion 102 are not limited to the fitting between the arc-shaped protrusions and the arc-shaped sliding grooves. The following exemplarily describes some other solutions.

Optionally, in some other embodiments, one of the two fifth arc-shaped sliding portions 101 and the two fifth arc-shaped sliding fit portions 201 may be an arc-shaped sliding groove, and the other may include multiple sub-sliding portions; one of the sixth arc-shaped sliding portion 202 and the sixth arc-shaped sliding fit portion 102 may be an arc-shaped sliding groove, and the other may include multiple sub-sliding portions; and each sub-sliding portion is, but not limited to, a protrusion in fit with the arc-shaped sliding groove. Each sub-sliding portion is slidably arranged in the arc-shaped sliding groove, and the sub-sliding portion and the groove wall of the arc-shaped sliding groove may be in point contact, line contact, or surface contact, so that the fifth arc-shaped sliding portion 101 and the fifth arc-shaped sliding fit portion 201 slide relative to each other along the arc-shaped trajectory.

The first swing arm 10 and the second swing arm 20 may be various types of swing arms. For example, the first swing arm and the second swing arm may be synchronous swing arms or main swing arms.

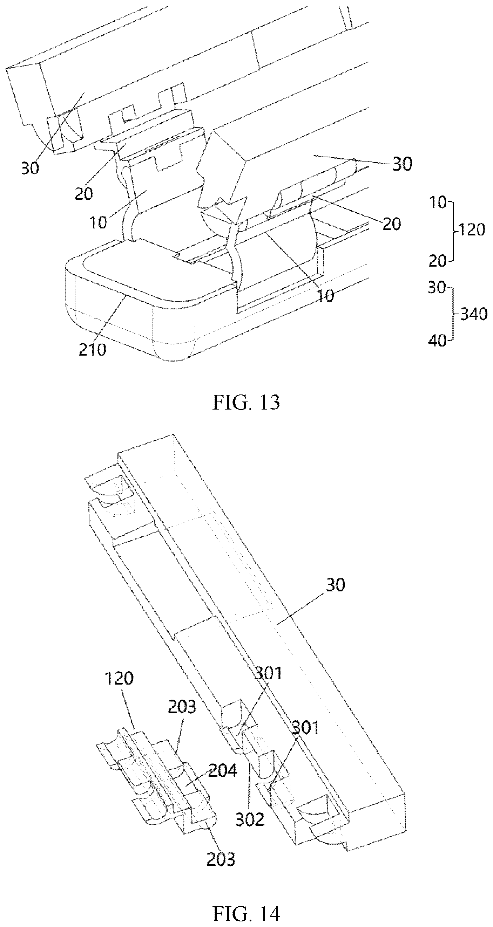

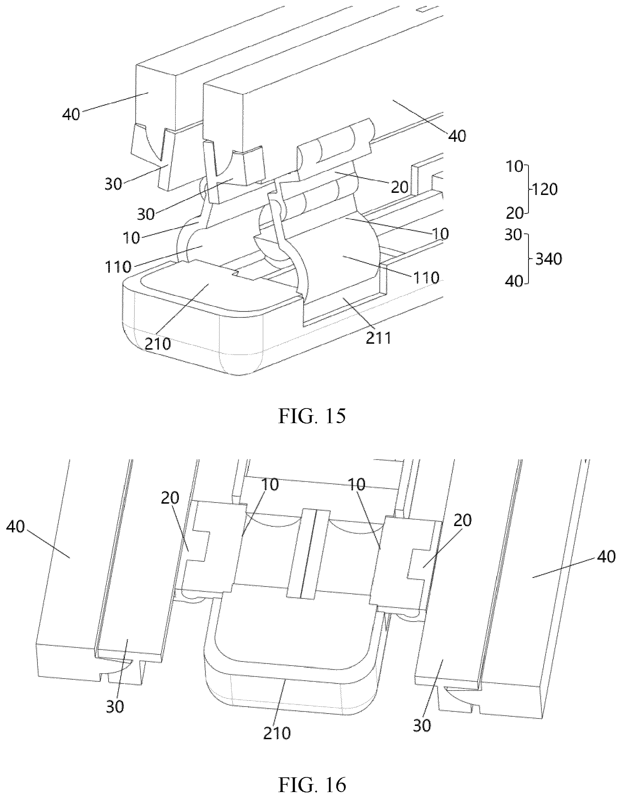

Continuously refer to FIG. 13 to FIG. 15. FIG. 13 is a schematic structural diagram shows fitting between a swing arm assembly and a door panel assembly according to some embodiments of this application. FIG. 14 is an exploded schematic diagram shows connection between a swing arm assembly and a door panel assembly in FIG. 13. FIG. 15 is a schematic structural diagram of a hinge according to some embodiments of this application.

In some embodiments, the door panel assemblies 340 are respectively arranged on two sides of the base 210, and one end of the door panel assembly 340 located on one side of the base 210 is rotatably connected to the swing arm assembly 120.

Specifically, in some embodiments, as shown in FIG. 13, the door panel assemblies 340 located on two sides of the base 210 each include connecting members 30, the connecting members 30 are respectively arranged on two sides of the base 210, and in the swing arm assembly 120 and the connecting member 30 located on the same side of the base 210, the swing arm assembly 120 is rotatably connected to the connecting member 30.

As shown in FIG. 14, in the swing arm assembly 120 and the connecting member 30 located on the same side of the base 210, the end of the swing arm assembly 120 close to the connecting member 30 is provided with two first arc-shaped sliding portions 203 and a second arc-shaped sliding fit portion 204. The two first arc-shaped sliding portions 203 are respectively located on two opposite sides of the second arc-shaped sliding fit portion 204, and are arranged side by side with the second arc-shaped sliding fit portion 204 along the length direction of the base 210.

The side of the connecting member 30 close to the swing arm assembly 120 is provided with two first arc-shaped sliding fit portions 301 and a second arc-shaped sliding portion 302. The two first arc-shaped sliding fit portions 301 are respectively located on two opposite sides of the second arc-shaped sliding portion 204, are respectively located on two opposite sides of the second arc-shaped sliding portion 302, and are arranged side by side with the second arc-shaped sliding portion 302 along the length direction of the connecting member.

Arc-shaped surfaces of the two first arc-shaped sliding portions 203 on the swing arm assembly 120 overlap with inner wall surfaces of the two first arc-shaped sliding fit portions 301 on the connecting member 30, so that the two arc-shaped sliding portions 203 on the swing arm assembly 120 are in sliding fit with the two arc-shaped sliding fit portions 301 on the connecting member 30. The second arc-shaped sliding portion 302 on the connecting member 30 overlaps with an inner wall surface of the second arc-shaped sliding fit portion 204 on the swing arm assembly 120, so that the second arc-shaped sliding fit portion 204 on the swing arm assembly 120 is in sliding fit with the second arc-shaped sliding portion 302 on the connecting member 30.

It can be understood that the two first arc-shaped sliding fit portions 301 are configured to allow the two first arc-shaped sliding portions 203 to slide thereon, and the second arc-shaped sliding fit portion 204 is configured to allow the second arc-shaped sliding portion 302 to slide thereon. Through the sliding fit between the two first arc-shaped sliding portions 203 and the two first arc-shaped sliding fit portions 301, as well as the sliding fit between the first arc-shaped sliding portion 302 and the first arc-shaped sliding fit portion 204, the swing arm assembly 120 and the connecting member 30 are rotatably connected.

By arranging two first arc-shaped sliding portions 203 and one second arc-shaped sliding fit portion 204 on the swing arm assembly 120, and arranging two first arc-shaped sliding fit portions 301 and one second arc-shaped sliding portion 302 on the connecting member 30, the sliding trajectories of the swing arm assembly 120 and the connecting member 30 are jointly defined by the first arc-shaped sliding portions 203, the first arc-shaped sliding fit portions 301, the second arc-shaped sliding portion 302, and the second arc-shaped sliding fit portion 204. On the one hand, by jointly defining the sliding trajectories of the swing arm assembly 120 and the connecting member 30 through the two first arc-shaped sliding fit portions 301 and the second arc-shaped sliding fit portion 204, the precision requirements of the first arc-shaped sliding fit portions 301 and the second arc-shaped sliding fit portion 204 can be reduced, thereby reducing the manufacturing difficulty and manufacturing cost of the connecting member and the swing arm. On the other hand, by jointly defining the sliding trajectories of the swing arm assembly 120 and the connecting member 30 through the two first arc-shaped sliding fit portions 301 and the second arc-shaped sliding fit portion 204, the first arc-shaped sliding fit portions 301, the second arc-shaped sliding portion 301, the first arc-shaped sliding portions 203, and the second arc-shaped sliding fit portion 204 can be arranged in a distributed manner. The multiple arc-shaped sliding fit portions and arc-shaped sliding portions arranged in a distributed manner can increase the overlap between the swing arm assembly 120 and the connecting member 30, increase the connection strength between the swing arm assembly 120 and the connecting member 30, and ensure that the swing arm assembly 20 and the connecting member 30 do not easily disconnect during relative sliding, thereby achieving good reliability.

It can be understood that the connecting members 30 being respectively arranged on two sides of the base 210 refers to that the connecting members 30 are arranged on the two sides of the base 210, but the number of the connecting members 30 on each side may be one or more, and the number of the connecting members 30 on the two sides of the base 210 may be the same or different. Optionally, the connecting members 30 on the two sides of the base 210 may be arranged opposite to each other, that is, the connecting members are approximately located at the same position along the length direction of the base 210. FIG. 13 exemplarily shows this case. Of course, in some other embodiments, the connecting members 30 on the two sides of the base 210 may also be arranged non-opposite to each other, that is, the connecting members are staggered along the length direction of the base 210.

It can be understood that the rotatable connection between the swing arm assembly 120 and the connecting member 30 located on the same side of the base 210 is achieved through the sliding fit between two first arc-shaped sliding portions 203 and two first arc-shaped sliding fit portions 301, as well as the sliding fit between the second arc-shaped sliding portion 302 and the second arc-shaped sliding fit portion 204. Therefore, the two first arc-shaped sliding portions 203 and the two first arc-shaped sliding fit portions 301 slide relative to each other along the arc-shaped trajectory to achieve relative rotation, and the second arc-shaped sliding portion 302 and the second arc-shaped sliding fit portion 204 slide relative to each other along the arc-shaped trajectory to achieve relative rotation. The two first arc-shaped sliding portions 203 and the two first arc-shaped sliding fit portions 301 are both arc-shaped structures, and the second arc-shaped sliding portion 302 and the second arc-shaped sliding fit portion 204 are both arc-shaped structures. They may also be various forms of arc-shaped structures, provided they can achieve relative sliding and contact fit along the arc-shaped trajectory. For the possible structures, a reference may be made to the above embodiments. The two first arc-shaped sliding portions 203, the second arc-shaped sliding fit portion 204, and the swing arm assembly 120 may be an integrally formed structure, or may be separately formed and then fixedly connected. Similarly, the two first arc-shaped sliding fit portions 302, the second arc-shaped sliding portion 302, and the connecting member 30 may be an integrally formed structure, or may be separately formed and then fixedly connected.

The connecting members 30 located on the two sides of the base 210 can rotate relative to each other based on the base 210, so as to cause the hinge mechanism 200 to switch between the unfolded state and the folded state. When the hinge mechanism 200 switches from the unfolded state to the folded state, the connecting members 30 located on the two sides of the base 210 rotate toward each other, the connecting members 30 drive the swing arm assemblies 120 to rotate relative to the base 210, and the swing arm assemblies 120 located on the two sides of the base 210 also rotate toward each other. At the same time, the first arc-shaped sliding portions 203 and the first arc-shaped sliding fit portions 301 slide relative to each other, so that the connecting members 30 and the swing arm assemblies 120 rotate relative to each other.

When the hinge mechanism 200 switches from the folded state to the unfolded state, the connecting members 30 located on the two sides of the base 210 rotate away from each other, the connecting members 30 drive the swing arm assemblies 120 to rotate relative to the base 210, and the swing arm assemblies 120 located on the two sides of the base 210 also rotate away from each other. At the same time, the first arc-shaped sliding portions 203 and the first arc-shaped sliding fit portions 301 slide relative to each other, so that the connecting members 30 and the swing arm assemblies 120 rotate relative to each other. The connecting members 30 move approximately towards the base 210 and close to the swing arm assemblies 120. This may be regarded as a reduction in the length of a combination formed by the connecting members 30 and the swing arm assemblies 120.

Continuously refer to FIG. 14. One of the first arc-shaped sliding portions 203 and the first arc-shaped sliding fit portions 301 is an arc-shaped protrusion, and the other is an arc-shaped sliding groove in sliding fit with the arc-shaped protrusion. One of the second arc-shaped sliding portion 302 and the second arc-shaped sliding fit portion 204 is an arc-shaped protrusion, and the other is an arc-shaped sliding groove in sliding fit with the arc-shaped protrusion. FIG. 14 exemplarily shows a case that the first arc-shaped sliding portions 203 are arc-shaped protrusions, the first arc-shaped sliding fit portions 301 are arc-shaped sliding grooves, the second arc-shaped sliding portion 302 is an arc-shaped protrusion, and the second arc-shaped sliding fit portion 204 is an arc-shaped sliding groove. Of course, the two may also be exchanged, that is, the first arc-shaped sliding portions 203 are arc-shaped sliding grooves, the first arc-shaped sliding fit portions 301 are arc-shaped protrusions, the second arc-shaped sliding portion 302 is an arc-shaped sliding groove, and the second arc-shaped sliding fit portion 204 is a sliding rail. The two first arc-shaped sliding portions 203 are in surface contact with the two first arc-shaped sliding fit portions 301, the second arc-shaped sliding portion 302 is in surface contact with the second arc-shaped sliding fit portion 204, and an arc-shaped sliding rail may slide inside the arc-shaped sliding groove along a groove wall of the arc-shaped sliding groove and be in surface contact with the groove wall of the arc-shaped sliding groove.

It can be understood that the arc-shaped sliding rail may be, but not limited to, various structural forms of arc-shaped protrusions, provided it can be in sliding fit with the arc-shaped sliding groove along the arc-shaped trajectory.

By adopting such arrangement, since the arc-shaped protrusions are in sliding fit with the arc-shaped sliding grooves, and the two are in surface contact, compared with point contact and line contact, surface contact contributes to enhancing the stability and reliability during the relative sliding of the first arc-shaped sliding portions 203 and the first arc-shaped sliding fit portions 301, and the relative sliding of the second arc-shaped sliding portion 302 and the second arc-shaped sliding fit portion 204, thereby improving the stability of the rotating fit between the swing arm assemblies 120 and the connecting members 30.

Optionally, referring to FIG. 14, the two first arc-shaped sliding fit portions 301 and the second arc-shaped sliding fit portion 204 are arc-shaped sliding grooves, and each arc-shaped sliding groove may be formed with an opening in one end of the swing arm assembly 120 and one side of the connecting member 30 to avoid the swing arm assembly 20 through the opening, thereby reducing the overall thickness formed by the overlapping and fitting of the swing arm assembly 120 and the connecting member 30.

Optionally, in some other embodiments, the two first arc-shaped sliding portions 203 and the two first arc-shaped sliding fit portions 301 may both be arc-shaped protrusions or arc-shaped sliding rails, and the second arc-shaped sliding portion 302 and the second arc-shaped sliding fit portion 204 may both be arc-shaped protrusions or arc-shaped sliding rails. Outer walls of the arc-shaped sliding portions and the arc-shaped sliding fit portions include arc-shaped surfaces. The arc-shaped surfaces of the two first arc-shaped sliding portions 203 are in sliding fit and surface contact with the arc-shaped surfaces of the two first arc-shaped sliding fit portions 301, and the two can also slide along the arc-shaped trajectory, so that the swing arm assembly 120 is rotatably connected to the connecting member 30.

Optionally, in some other embodiments, one of the first arc-shaped sliding portions 203 and the first arc-shaped sliding fit portions 301 may be an arc-shaped sliding groove, and the other may include multiple sub-sliding portions; one of the second arc-shaped sliding portion 302 and the second arc-shaped sliding fit portion 204 may be an arc-shaped sliding groove, and the other may also include multiple sub-sliding portions. Each sub-sliding portion is slidably arranged in the arc-shaped sliding groove, the sub-sliding portion and the groove wall of the arc-shaped sliding groove may be in point contact, line contact, or surface contact, so that the first arc-shaped sliding portions 203 and the first arc-shaped sliding fit portions 301 slide relative to each other along the arc-shaped trajectory, and the second arc-shaped sliding portion 302 and the second arc-shaped sliding fit portion 204 slide relative to each other along the arc-shaped trajectory.

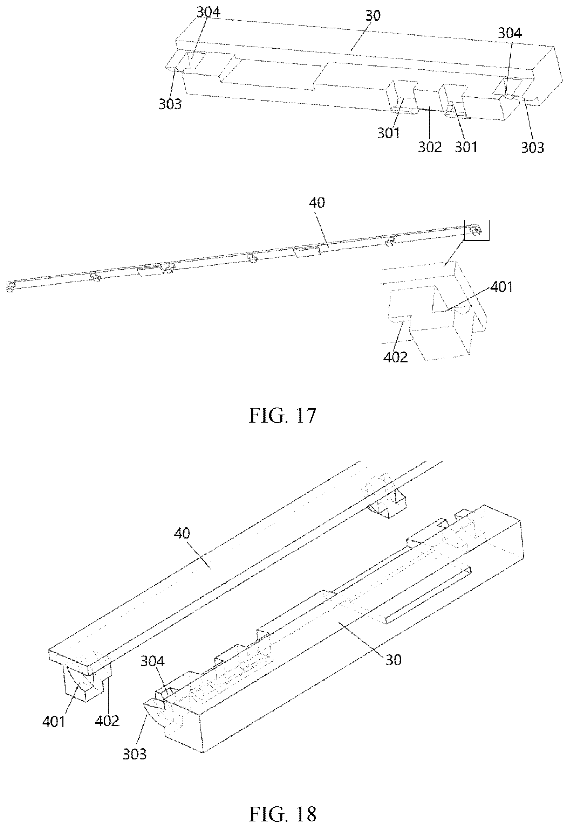

Continuously refer to FIG. 16 to FIG. 18. FIG. 16 is a schematic diagram of a hinge mechanism in an unfolded state according to some embodiments of this application. FIG. 17 is a schematic structural diagram shows fitting between a connecting member and a door panel. FIG. 18 is a schematic diagram shows fitting between a connecting member and a door panel.

Specifically, in some embodiments, each door panel assembly 340 includes a connecting member 30 and a door panel 40. Specifically, As shown in FIG. 16, each door panel assembly 340 includes a connecting member 30 and a door panel 40, the connecting member 30 and the door panel 40 located on the same side of the base 210 are rotatably connected, the door panels 40 are respectively arranged on two sides of the base 210, and in the connecting member 30 and the door panel 40 located on the same side of the base 210, the side of the connecting member 30 close to the door panel 40 is provided with a third arc-shaped sliding portion 303 and a fourth arc-shaped sliding fit portion 304, and the third arc-shaped sliding portion 303 and the fourth arc-shaped sliding fit portion 304 are arranged side by side along the length direction of the connecting member.

The side of the door panel 40 close to the connecting member 30 is provided with a third arc-shaped sliding fit portion 401 and a fourth arc-shaped sliding portion 402. The third arc-shaped sliding fit portion 401 and the fourth arc-shaped sliding portion 402 are arranged side by side along the length direction of the door panel 40.

The third arc-shaped sliding portion 303 on the connecting member 30 is arranged in the third arc-shaped sliding fit portion 401 on the door panel 40, so that the third arc-shaped sliding portion 303 on the connecting member 30 is in sliding fit with the third sliding fit portion 401 on the door panel 40. The fourth arc-shaped sliding portion 402 on the door panel 40 is arranged in the fourth sliding fit portion 304 on the connecting member 30, so that the fourth arc-shaped sliding portion 402 is in sliding fit with the fourth arc-shaped sliding fit portion 304.

It can be understood that the third arc-shaped sliding fit portion 401 is configured to allow the third arc-shaped sliding portion 303 to slide thereon, and the fourth arc-shaped sliding fit portion 304 is configured to allow the fourth arc-shaped sliding portion 402 to slide thereon. By arranging the third sliding portion 303 and the fourth arc-shaped sliding fit portion 304 on the connecting member 30 and the third sliding fit portion 401 and the fourth sliding portion 402 on the door panel 40 to jointly define the sliding trajectory of the connecting member 30 and the door panel 40, the requirement on the connection precision between the connecting member 30 and the door panel 40 can be reduced, thereby reducing the manufacturing difficulty and manufacturing cost of the connecting member and the door panel. On the other hand, the third arc-shaped sliding portion 303, the third sliding fit portion 401, the fourth sliding portion 402, and the fourth sliding fit portion 304 are arranged in a distributed manner. The multiple arc-shaped sliding portions and arc-shaped sliding fit portions arranged in a distributed manner can increase the overlap between the connecting member 30 and the door panel 40, increase the connection strength between the connecting member 30 and the door panel, and ensure that the connecting member 30 and the door panel 40 do not easily disconnect during relative rotation, thereby achieving good reliability.

It can be understood that the third arc-shaped sliding portion 303 and the third arc-shaped sliding fit portion 401 slide relative to each other along the arc-shaped trajectory to achieve relative rotation, and the fourth arc-shaped sliding portion 402 and the fourth arc-shaped sliding fit portion slide relative to each other along the arc-shaped trajectory to achieve relative rotation. The third arc-shaped sliding portion 303 and the third arc-shaped sliding fit portion 401 are both arc-shaped structures, the fourth arc-shaped sliding portion 402 and the fourth arc-shaped sliding fit portion 304 are both arc-shaped structures. They may also be various forms of arc-shaped structures, provided they can achieve relative sliding and contact fit along the arc-shaped trajectory. The third arc-shaped sliding fit portion 303, the fourth arc-shaped sliding portion 304, and the connecting member 30 may be an integrally formed structure, or may be separately formed and then fixedly connected. Similarly, the third arc-shaped sliding fit portion 401, the fourth arc-shaped sliding portion 402, and the door panel 40 may be an integrally formed structure, or may be separately formed and then fixedly connected.

Optionally, one of the third arc-shaped sliding portion 303 and the third arc-shaped sliding fit portion 401 is an arc-shaped protrusion, and the other is an arc-shaped sliding groove in sliding fit with the arc-shaped protrusion. One of the fourth arc-shaped sliding portion 402 and the fourth arc-shaped sliding fit portion 304 is an arc-shaped protrusion, and the other is an arc-shaped sliding groove in sliding fit with the arc-shaped protrusion. FIG. 17 to FIG. 18 exemplarily show a case that the third arc-shaped sliding portion 303 and the fourth arc-shaped sliding portion 402 are arc-shaped protrusions, the third arc-shaped sliding fit portion 401 and the fourth arc-shaped sliding fit portion 304 are arc-shaped sliding grooves. Of course, the two may also be exchanged, that is, the third arc-shaped sliding portion 303 and the fourth arc-shaped sliding portion 402 are arc-shaped sliding grooves, and the third arc-shaped sliding fit portion 401 and the fourth arc-shaped sliding fit portion 304 are arc-shaped protrusions. The third arc-shaped sliding portion 303 is in surface contact with the third arc-shaped sliding fit portion 401, the fourth arc-shaped sliding portion 402 and the fourth arc-shaped sliding fit portion 304 are arc-shaped sliding rails. That is, this ensures sliding inside the arc-shaped sliding grooves along groove walls of the arc-shaped sliding grooves and being in surface contact with the groove walls of the arc-shaped sliding grooves.

By adopting such arrangement, since the arc-shaped sliding rails are in sliding fit with the arc-shaped sliding grooves, and the two are in surface contact, compared with point contact and line contact, surface contact contributes to enhancing the stability and reliability during the relative sliding of the third arc-shaped sliding portion 303 and the third arc-shaped sliding fit portion 401, and the relative sliding of the fourth arc-shaped sliding portion 402 and the fourth arc-shaped sliding fit portion 304, thereby improving the stability of the rotating fit between the connecting member 30 and the door panel 40.

Optionally, the third arc-shaped sliding fit portion 401 and the fourth arc-shaped sliding fit portion 304 are arc-shaped sliding grooves, and each arc-shaped sliding groove may be formed with an opening in one side of the connecting member 30 and the door panel 40 to assemble the connecting member 30 and the door panel 40 through the opening, thereby reducing the overall thickness formed by the overlapping and fitting of the connecting member 30 and the door panel 40.

Optionally, in some other embodiments, one of the third arc-shaped sliding portion 303 and the third arc-shaped sliding fit portion 401 may be an arc-shaped sliding groove, and the other may include multiple sub-sliding portions; one of the fourth arc-shaped sliding portion 402 and the fourth arc-shaped sliding fit portion 304 may be an arc-shaped sliding groove, and the other may include multiple sub-sliding portions. Each sub-sliding portion is slidably arranged in the arc-shaped sliding groove, the sub-sliding portion and the groove wall of the arc-shaped sliding groove may be in point contact, line contact, or surface contact, so that the third arc-shaped sliding portion 303 and the third arc-shaped sliding fit portion 401 slide relative to each other along the arc-shaped trajectory, and the fourth arc-shaped sliding portion 402 and the fourth arc-shaped sliding fit portion 304 slide relative to each other along the arc-shaped trajectory.

In some embodiments, each swing arm assembly 120 may further include a first swing arm 10, a second swing arm 20, and a connecting member 30, and each door panel assembly 340 includes a door panel 40. The connection method between the swing arm assembly 120 and the door panel assembly 340, that is, the connection method between the connecting member 30 and the door panel 40, can be specifically understood by referring to the connection method between the connecting member 30 and the door panel 40 in the above embodiments.

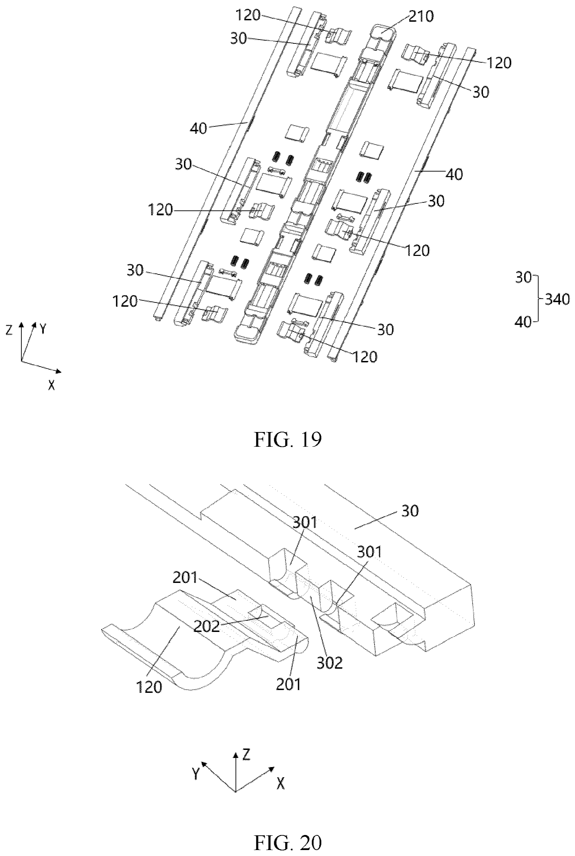

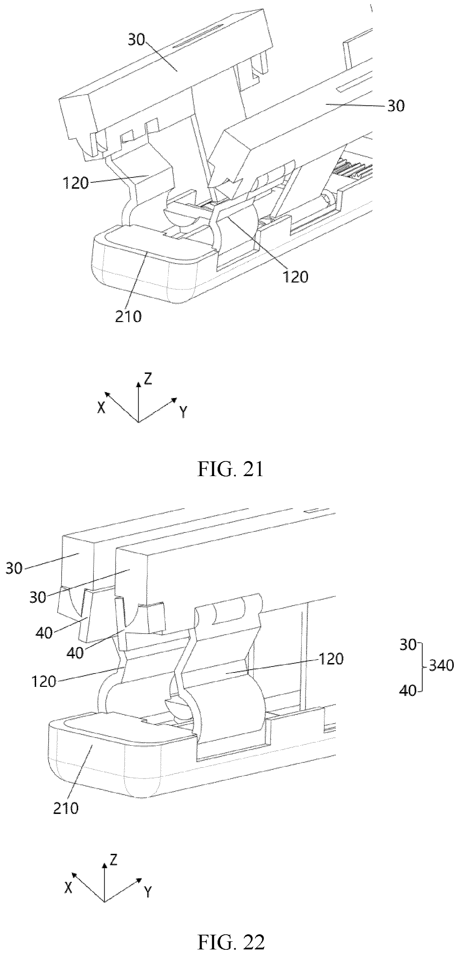

Continuously refer to FIG. 19 to FIG. 22. FIG. 19 is an exploded schematic diagram of a hinge according to some embodiments of this application. FIG. 20 is a schematic diagram shows connection between a swing arm assembly and a door panel assembly. FIG. 21 is an exploded schematic diagram of a swing arm assembly and a door panel assembly. FIG. 22 is a schematic diagram of a hinge in a folded state according to some embodiments of this application.

In some embodiments, each swing arm assembly 120 in the hinge mechanism 200 may also only include one swing arm, as shown in FIG. 19. The hinge mechanism 200 includes a base 210, at least two swing arm assemblies 120, and at least two door panel assemblies 340. Each swing arm assembly 120 is rotatably connected to the base 210. The specific connection form is not limited. The specific connection form can be understood by referring to the connection method between the swing arm assembly and the base 210 in the above embodiments, provided it can achieve the rotatable connection between the swing arm assembly 120 and the base 210. The swing arm assembly 120 and the door panel assembly 340 located on the same side of the base 210 are rotatably connected.

Specifically, as shown in FIG. 20 and FIG. 21, in the swing arm assembly 120 and the door panel assembly 340 located on the same side of the base 210, the end of the swing arm assembly 120 close to the door panel assembly 340 is provided with two first arc-shaped sliding portions 203 and one second arc-shaped sliding fit portion 204. The two first arc-shaped sliding portions 203 are respectively located on two opposite sides of the second arc-shaped sliding fit portion 204, and are arranged side by side with the second arc-shaped sliding fit portion 204 along the length direction of the base 210.

The side of the door panel assembly 340 close to the swing arm assembly 120 is provided with two first arc-shaped sliding fit portions 301 and one second arc-shaped sliding portion 302. The two first arc-shaped sliding fit portions 301 are respectively located on two opposite sides of the second arc-shaped sliding portion 204, are respectively located on two opposite sides of the second arc-shaped sliding portion 302, and are arranged side by side with the second arc-shaped defining portion 302 along the length direction of the connecting member.

The two first arc-shaped sliding portions 203 on the swing arm assembly 120 overlap with the two first arc-shaped sliding fit portions 301 on the door panel assembly 340, so that the two arc-shaped sliding portions 203 on the swing arm assembly 120 are in sliding fit with the two arc-shaped sliding fit portions 301 on the door panel assembly 340. The second arc-shaped sliding portion 302 on the door panel assembly 340 is placed in the second arc-shaped sliding fit portion 204 on the swing arm assembly 120, so that the second arc-shaped sliding fit portion 204 on the swing arm assembly 120 is in sliding fit with the second arc-shaped sliding portion 302 on the door panel assembly 340.

It can be understood that the two first arc-shaped sliding fit portions 301 are configured to allow the two first arc-shaped sliding portions 203 to slide thereon, and the second arc-shaped sliding fit portion 204 is configured to allow the second arc-shaped sliding portion 302 to slide thereon. Through the sliding fit between the two first arc-shaped sliding portions 203 and the two second arc-shaped sliding fit portions 301, as well as the sliding fit between the second arc-shaped sliding portion 302 and the second arc-shaped sliding fit portion 204, the swing arm assembly 10 and the door panel assembly 340 are rotatably connected.

By arranging two first arc-shaped sliding portions 203 and one second arc-shaped sliding fit portion 204 on the swing arm assembly 120, and arranging two first arc-shaped sliding fit portions 301 and one second arc-shaped sliding portion 302 on the door panel assembly 340, the sliding trajectories of the swing arm assembly 120 and the door panel assembly 340 are jointly defined by the first arc-shaped sliding portions 203, the first arc-shaped sliding fit portions 301, the second arc-shaped sliding portion 302, and the second arc-shaped sliding fit portion 204. On the one hand, by jointly defining the sliding trajectories of the first swing arm 120 and the door panel assembly 340 through the two first arc-shaped sliding fit portions 301 and the second arc-shaped sliding fit portion 204, the precision requirements of the first arc-shaped sliding fit portions 301 and the second arc-shaped sliding fit portion 204 can be reduced, thereby reducing the manufacturing difficulty and manufacturing cost of the door panel assembly 340 and the swing arm assembly 120. On the other hand, by jointly defining the sliding trajectories of the swing arm assembly 120 and the door panel assembly 340 through the two first arc-shaped sliding fit portions 301 and the second arc-shaped sliding fit portion 204, the first arc-shaped sliding fit portions 301, the second arc-shaped sliding portion 301, the first arc-shaped sliding portions 203, and the second arc-shaped sliding fit portion 204 can be arranged in a distributed manner. The multiple arc-shaped sliding fit portions and arc-shaped sliding portions arranged in a distributed manner can increase the overlap between the swing arm assembly 120 and the door panel assembly 340, increase the connection strength between the first swing arm assembly 120 and the door panel assembly 340, and ensure that the swing arm assembly 120 and the door panel assembly 340 do not easily disconnect during relative sliding, thereby achieving good reliability.

The embodiments of this application are described in detail above. The principles and the implementations of this application are described herein by using specific examples. The description of the above embodiments is merely intended to help to understand the method and the core idea of this application. In addition, those skilled in the art can make changes to the specific implementations and the application scope according to the idea of this application. Therefore, the content of this specification shall not be understood as a limitation on this application.

## Claims

1. A hinge mechanism, comprising:
a base;
at least two swing arm assemblies respectively arranged on two sides of the base, wherein the swing arm assemblies are rotatably connected to the base; and
at least two door panel assemblies respectively arranged on two sides of the base, wherein
in the swing arm assembly and the door panel assembly located on a same side of the base, one end of the door panel assembly is connected to an end of the swing arm assembly away from the base; one of the end of the door panel assembly connected to the swing arm assembly and the end of the swing arm assembly connected to the door panel assembly is provided with a first arc-shaped sliding portion and a second arc-shaped sliding fit portion, and the other is provided with a first arc-shaped sliding fit portion and a second arc-shaped sliding portion; and
the first arc-shaped sliding portion is in sliding fit with the first arc-shaped sliding fit portion, and the second arc-shaped sliding portion is in sliding fit with the second arc-shaped sliding fit portion, so that the swing arm assembly is rotatably connected to the door panel assembly.

2. The hinge mechanism according to claim 1, wherein each door panel assembly comprises a connecting member and a door panel;
one of an end of the connecting member connected to the swing arm assembly and an end of the swing arm assembly connected to the connecting member is provided with the first arc-shaped sliding portion and the second arc-shaped sliding fit portion, and the other is provided with the first arc-shaped sliding fit portion and the second arc-shaped sliding portion; and
an end of the connecting member away from the swing arm assembly is rotatably connected to the door panel.

3. The hinge mechanism according to claim 2, wherein one of the end of the connecting member connected to the door panel and an end of the door panel connected to the connecting member is provided with a third arc-shaped sliding portion and a fourth arc-shaped sliding fit portion, and the other is provided with a third arc-shaped sliding fit portion and a fourth arc-shaped sliding portion; and
the third arc-shaped sliding portion is in sliding fit with the fourth arc-shaped sliding fit portion, and the third arc-shaped sliding fit portion is in sliding fit with the fourth arc-shaped sliding portion, so that the connecting member is rotatably connected to the door panel.

4. The hinge mechanism according to claim 1, wherein each swing arm assembly comprises a connecting member, and each door panel assembly comprises a door panel;
one of an end of the connecting member connected to the door panel and an end of the door panel connected to the connecting member is provided with a third arc-shaped sliding portion and a fourth arc-shaped sliding fit portion, and the other is provided with a third arc-shaped sliding fit portion and a fourth arc-shaped sliding portion; and
the third arc-shaped sliding portion is in sliding fit with the fourth arc-shaped sliding fit portion, and the third arc-shaped sliding fit portion is in sliding fit with the fourth arc-shaped sliding portion, so that the connecting member is rotatably connected to the door panel.

5. The hinge mechanism according to claim 3 or 4, wherein one of the third arc-shaped sliding portion and the third arc-shaped sliding fit portion is an arc-shaped sliding groove, and the other is an arc-shaped protrusion in sliding fit with the arc-shaped sliding groove; and
one of the fourth arc-shaped sliding portion and the fourth arc-shaped sliding fit portion is an arc-shaped sliding groove, and the other is an arc-shaped protrusion in sliding fit with the arc-shaped sliding groove.

6. The hinge mechanism according to any one of claims 3 to 5, wherein the third arc-shaped sliding portion, the fourth arc-shaped sliding fit portion and the connecting member are an integral structure, and/or the third arc-shaped sliding fit portion, the fourth arc-shaped sliding portion and the door panel are an integrally formed structure.

7. The hinge mechanism according to any one of claims 3 to 6, wherein one of the end of the connecting member connected to the door panel and the end of the door panel connected to the connecting member is provided with at least two third arc-shaped sliding portions and at least one fourth arc-shaped sliding fit portion, and the other is provided with at least two third arc-shaped sliding fit portions and at least one fourth arc-shaped sliding portion;
along a length direction of the base, the third arc-shaped sliding portions and the fourth arc-shaped sliding fit portion are alternately arranged; and the third arc-shaped sliding fit portions and the fourth arc-shaped sliding portion are alternately arranged.

8. The hinge mechanism according to any one of claims 1 to 7, wherein each swing arm assembly comprises a first swing arm, each door panel assembly comprises a second swing arm, one of an end of the second swing arm connected to the first swing arm and an end of the first swing arm connected to the second swing arm is provided with the first arc-shaped sliding portion and the second arc-shaped sliding fit portion, and the other is provided with two first arc-shaped sliding fit portions and the second arc-shaped sliding portion.

9. The hinge mechanism according to any one of claims 1 to 7, wherein each swing arm assembly comprises a first swing arm and a second swing arm, one end of the first swing arm is rotatably connected to the base, and the other end of the first swing arm is rotatably connected to one end of the second swing arm; and
one of an end of the second swing arm connected to the door panel assembly and an end of the door panel assembly connected to the second swing arm is provided with the first arc-shaped sliding portion and the second arc-shaped sliding fit portion, and the other is provided with two first arc-shaped sliding fit portions and the second arc-shaped sliding portion.

10. The hinge mechanism according to claim 9, wherein one of the end of the first swing arm connected to the second swing arm and the end of the second swing arm connected to the first swing arm is provided with a fifth arc-shaped sliding portion and a sixth arc-shaped sliding fit portion, and the other is provided with a fifth arc-shaped sliding fit portion and a sixth arc-shaped sliding fit portion; and
the fifth arc-shaped sliding portion is in sliding fit with the fifth arc-shaped sliding fit portion, and the sixth arc-shaped sliding portion is in sliding fit with the sixth arc-shaped sliding fit portion, so that the first swing arm is rotatably connected to the second swing arm.

11. The hinge mechanism according to claim 10, wherein the fifth arc-shaped sliding portion, the sixth arc-shaped sliding fit portion and the first swing arm are an integral structure, and/or the fifth arc-shaped sliding fit portion, the sixth arc-shaped sliding portion and the second swing arm are an integrally formed structure.

12. The hinge mechanism according to claim 10 or 11, wherein one of the end of the first swing arm connected to the second swing arm and the end of the second swing arm connected to the first swing arm is provided with at least two fifth arc-shaped sliding portions and at least one sixth arc-shaped sliding fit portion, and the other is provided with at least two fifth arc-shaped sliding fit portions and at least one sixth arc-shaped sliding portion;
along the length direction of the base, the fifth arc-shaped sliding portions and the sixth arc-shaped sliding fit portion are alternately arranged; and the fifth arc-shaped sliding fit portions and the sixth arc-shaped sliding portion are alternately arranged.

13. The hinge mechanism according to any one of claims 10 to 12, wherein one of the fifth arc-shaped sliding portion and the fifth arc-shaped sliding fit portion is an arc-shaped sliding groove, and the other is an arc-shaped protrusion in sliding fit with the arc-shaped sliding groove; and
one of the sixth arc-shaped sliding portion and the sixth arc-shaped sliding fit portion is an arc-shaped sliding groove, and the other is an arc-shaped protrusion in sliding fit with the arc-shaped sliding groove.

14. The hinge mechanism according to any one of claims 1 to 11, wherein one of the end of the swing arm assembly connected to the door panel assembly and the end of the door panel assembly connected to the swing arm assembly is provided with at least two first arc-shaped sliding portions and at least one second arc-shaped sliding fit portion, and the other is provided with at least two first arc-shaped sliding fit portions and at least one second arc-shaped sliding portion;
along the length direction of the base, the first arc-shaped sliding portions and the second arc-shaped sliding fit portion are alternately arranged; and the first arc-shaped sliding fit portions and the second arc-shaped sliding portion are alternately arranged.

15. The hinge mechanism according to any one of claims 1 to 14, wherein one of the first arc-shaped sliding portion and the first arc-shaped sliding fit portion is an arc-shaped sliding groove, and the other is an arc-shaped protrusion in sliding fit with the arc-shaped sliding groove; and
one of the second arc-shaped sliding portion and the second arc-shaped sliding fit portion is an arc-shaped sliding groove, and the other is an arc-shaped protrusion in sliding fit with the arc-shaped sliding groove.

16. The hinge mechanism according to any one of claims 1 to 15, wherein the first arc-shaped sliding portion, the second arc-shaped sliding fit portion and the swing arm assembly are an integral structure, and/or the first arc-shaped sliding fit portion, the second arc-shaped sliding portion and the door panel assembly are an integrally formed structure.

17. An electronic device, comprising:
a foldable apparatus comprising a first housing, a second housing, and the hinge mechanism according to any one of claims 1 to 16, wherein
the first housing is connected to the door panel assembly on one side of the base, and the second housing is connected to the door panel assembly on the other side of the base; and
a foldable screen arranged on the first housing and the second housing, wherein a position of a foldable portion of the foldable screen corresponds to a position of the hinge mechanism.
